# EUROPÄISCHE PATENTSCHRIFT

(11) **EP 3 669 721 B1**
(45) Veröffentlichungstag und Bekanntmachung des Hinweises auf die Patenterteilung: **09.06.2021**
(21) Anmeldenummer: 18213569.9
(22) Anmeldetag: 18.12.2018
(51) Int. Cl.: A47J 37/06, A47J 37/07

(54) **VORRICHTUNG ZUR ERHITZUNG VON NAHRUNGSMITTELN**
DEVICE FOR HEATING FOOD PRODUCTS
DISPOSITIF DE CHAUFFAGE DES DENRÉES ALIMENTAIRES

(43) Veröffentlichungstag der Anmeldung: 24.06.2020
(73) Patentinhaber: Caso Holding GmbH, 59757 Arnsberg (DE)
(72) Erfinder: Braukmann, Bernhard, 59757 Amsberg (DE)
(74) Vertreter: Schäperklaus, Jochen

(56) Entgegenhaltungen:
- WO-A1-00/53067
- US-A- 2 108 298
- US-A1- 2015 033 957

## Beschreibung

Die vorliegende Erfindung betrifft eine Vorrichtung zur Erhitzung von Nahrungsmitteln gemäß dem Oberbegriff des Anspruchs 1.

Aus dem Stand der Technik sind solche Vorrichtungen beispielsweise als Kontaktgrill bekannt. Häufig werden Kontaktgrills elektrisch betrieben und weisen eine erste Wärmeplatte, die in einen schwenkbaren Deckel integriert ist, und eine zweite nicht bewegliche zweite Wärmeplatte auf.

Wenn ein Benutzer ein Nahrungsmittel erhitzen möchte, kann er es zwischen die Wärmeplatten legen, sodass das Nahrungsmittel sowohl von oben durch die erste Wärmeplatte als auch von unten von der zweiten Wärmeplatte erhitzt wird. Wenn das Nahrungsmittel ausreichend erhitzt wurde, kann der Deckel geöffnet werden, indem er verschwenkt wird. Das Nahrungsmittel kann dann entnommen werden.

Die US 2 108 298 A, US 2015/033957 A1 und WO 00/53067 A1 offenbaren jeweils eine Vorrichtung zur Erhitzung von Nahrungsmitteln mit zwei Wärmeplatten, einem Ventilator und Luftkanälen.

Demgegenüber liegt der vorliegenden Erfindung die Aufgabe zugrunde, eine verbesserte Vorrichtung zur Erhitzung von Nahrungsmitteln zu schaffen. Außerdem soll ein solches Verfahren geschaffen werden.

Diese Aufgabe wird durch eine Vorrichtung gemäß Anspruch 1 und durch ein Verfahren gemäß Anspruch 15 gelöst. Ausführungsformen der Erfindung sind in den abhängigen Ansprüchen angegeben.

Die Vorrichtung umfasst ein Gehäuse, eine erste Wärmeplatte und eine zweite Wärmeplatte. Die erste Wärmeplatte ist in einer ersten Position parallel zur zweiten Wärmeplatte angeordnet. Die Wärmeplatte ist von der ersten Position in eine zweite Position und umgekehrt verschwenkbar. Die erste Wärmeplatte und die zweite Wärmeplatte sind jeweils dazu ausgebildet, erhitzt zu werden und in direktem Kontakt ein Nahrungsmittel zu erhitzen.

Außerdem umfasst die Vorrichtung ein Belüftungsmittel und Luftkanäle. Das Belüftungsmittel ist am Gehäuse angeordnet und dazu ausgebildet, Luft von außerhalb der Vorrichtung anzusaugen und in die Luftkanäle einzublasen. Die Luftkanäle sind dazu ausgebildet, die Luft vom Belüftungsmittel zur ersten Wärmeplatte zu leiten. Vorzugsweise können die Luftkanäle innerhalb des Gehäuses angeordnet sein.

Bei Vorrichtungen aus dem Stand der Technik wird aufgrund der Erhitzung der ersten Wärmeplatte der Deckel so heiß, dass er von außen nicht durch einen Benutzer berührt werden soll. Durch das Belüftungsmittel und die durch die Luftkanäle strömende Luft erfolgt bei der erfindungsgemäßen Vorrichtung eine Kühlung des Deckels, da die strömende Luft erwärmt und zur ersten Wärmeplatte geführt wird.

Die erste Wärmeplatte umfasst Luftdurchlässe. Die Luftdurchlässe können beispielsweise als Löcher und/oder Schlitze in der ersten Wärmeplatte ausgebildet sein. Die Luftdurchlässe sind dazu ausgebildet, Luft von den Luftkanälen zwischen die erste Wärmeplatte in der ersten Position und die zweite Wärmeplatte zu leiten. Beispielsweise können die Luftkanäle in die Luftdurchlässe übergehen oder in den Luftdurchlässen münden.

Die Luftdurchlässe haben den Vorteil, dass die erwärmte Luft in den Raum zwischen der ersten Wärmeplatte in der ersten Position und der zweiten Wärmeplatte strömt. Ein dort angeordnetes Nahrungsmittel wird somit von oben mit warmer oder heißer Luft beaufschlagt. Dies kann insbesondere vorteilhaft bei Nahrungsmitteln sein, auf die kein großer Druck ausgeübt werden soll, da sie relativ weich sind und/oder an der ersten Wärmeplatte haften würde. Dies kann zum Beispiel bei Backwaren und bei Nahrungsmitteln, die mit Käse überbacken werden sollen, der Fall sein. Die erste Wärmeplatte kann dann oberhalb des Nahrungsmittels ohne Kontakt zum Nahrungsmittel angeordnet werden. Durch die erwärmte Luft, die aus den Luftdurchlässen austritt, wird das Nahrungsmittel dann trotzdem von oben erhitzt.

Nach einer Ausführungsform der Erfindung kann die Vorrichtung ein Erhitzungsmittel umfassen, das dazu ausgebildet ist, die erste Wärmeplatte und die von den Luftkanälen geleitete Luft zu erhitzen. Es kann sich dabei beispielsweise um ein elektrisch betriebenes Erhitzungsmittel handeln. Für die Erhitzung der Luft wird somit keine zusätzliche Energie und kein zusätzliches Bauteil benötigt, da Vorrichtungen aus dem Stand der Technik bereits häufig solch ein Erhitzungsmittel aufweisen.

Nach einer Ausführungsform der Erfindung können die Luftkanäle dazu ausgebildet sein, die Luft vom Belüftungsmittel durch das Gehäuse und anschließend aus dem Gehäuse nach außen zu führen. Dabei ist zu beachten, dass nur ein Teil der vom Belüftungsmittel in die Luftkanäle eingeblasenen Luft auf diese Weise aus dem Gehäuse in die Umgebung abgeführt wird. Der andere Teil kann - wie zuvor beschrieben - zur Erhitzung eines Nahrungsmittels verwendet werden.

Die Abführung der Luft nach außen ist besonders vorteilhaft, um eine Oberseite des Gehäuses gegenüber dem Erhitzungsmittel und/oder der ersten Wärmeplatte thermisch zu isolieren. Wärme, die sonst an die Oberseite gelangen würde, wird nach außen abgeführt.

Nach einer Ausführungsform der Erfindung kann das Gehäuse einen schwenkbaren Deckel umfassen. Das Belüftungsmittel kann an einer Außenseite des Deckels angeordnet sein. Die Luftkanäle können innerhalb des Deckels angeordnet sein. Unter einer Außenseite wird dabei im Rahmen dieser Beschreibung insbesondere eine Seite verstanden, die nach außen gerichtet und von außerhalb der Vorrichtung sichtbar ist.

Nach einer Ausführungsform der Erfindung kann die erste Wärmeplatte am Deckel angeordnet und mit dem Deckel verschwenkbar sein. Dies ist besonders vorteilhaft, da durch eine einfache Schwenkbewegung des Deckels sowohl der Deckel als auch die erste Wärmeplatte verschwenkt werden können.

Unter einem Deckel wird dabei im Rahmen dieser Beschreibung ein beim bestimmungsgemäßen Gebrauch der Vorrichtung oberes Bauteil verstanden, das in einem geöffneten Zustand und einem geschlossenen Zustand angeordnet werden kann. Im geschlossenen Zustand kann beispielsweise die erste Wärmeplatte in der ersten Position angeordnet sein, während im geöffneten Zustand die erste Wärmeplatte in der zweiten Position angeordnet sein kann. Im geöffneten Zustand kann ein Nahrungsmittel auf der zweiten Wärmeplatte angeordnet werden, während im geschlossenen Zustand die Erhitzung des Nahrungsmittels erfolgt.

Nach einer Ausführungsform der Erfindung können die Luftkanäle dazu ausgebildet sein, die Luft vom Belüftungsmittel durch den Deckel und in einem seitlichen Randbereich des Deckels aus dem Deckel heraus nach außen zu führen. Vorzugsweise wird die Luft in zwei seitlichen Randbereichen aus dem Deckel nach außen abgeführt. Unter einem seitlichen Randbereich wird dabei ein Randbereich des Deckels verstanden, der an einer Oberfläche angeordnet ist, die sich beim bestimmungsgemäßen Gebrauch der Vorrichtung von einer Oberseite des Deckels nach unten erstrecken. Die Abführung der Luft nach außen zu den Seiten ist vorteilhaft, da eine besonders gute Isolierung der Oberseite des Deckels gegenüber der ersten Wärmeplatte und den Erhitzungsmitteln erreicht wird.

Nach einer Ausführungsform der Erfindung kann das Belüftungsmittel an einer Oberseite des Deckels angeordnet sein.

Nach einer Ausführungsform der Erfindung können die Luftkanäle dazu ausgebildet sein, die Luft vom Belüftungsmittel mehrmals umzuleiten, bevor die Luft die Luftdurchlässe erreicht. Dies ist besonders vorteilhaft für eine besonders gute Erwärmung der Luft, da die Luft länger in der Nähe des Erhitzungsmittels strömt.

Beispielsweise können die Luftkanäle innerhalb des Gehäuses oder des Deckels durch Luftleitbleche begrenzt sein. Dies hat den Vorteil, dass die Luftleitbleche das Belüftungsmittel im ausgeschalteten Zustand vom Erhitzungsmittel und der ersten Wärmeplatte thermisch isolieren. Somit wird die Gefahr einer Beschädigung des Belüftungsmittels aufgrund einer Überhitzung verringert.

Nach einer Ausführungsform der Erfindung können die Luftkanäle dazu ausgebildet sein, die Luft zumindest einmal um mehr als 150°, vorzugsweise um in etwa 180°, umzulenken, bevor die Luft die Luftdurchlässe erreicht. Unter dem Begriff "in etwa" wird dabei im Rahmen der Beschreibung insbesondere verstanden, dass eine Abweichung vom angegebenen Wert, hier 180°, von 5% noch mit umfasst sein soll.

Eine solche Ablenkung ist insbesondere vorteilhaft, um eine besonders gute Erwärmung der Luft und eine besonders gute thermische Isolierung der Oberseite des Deckels und des Belüftungsmittels von der ersten Wärmeplatte und/oder vom Erhitzungsmittel zu erreichen.

Nach einer Ausführungsform der Erfindung kann die erste Wärmeplatte in der zweiten Position in etwa senkrecht zur zweiten Wärmeplatte angeordnet sein. Diese Anordnung hat den Vorteil, dass ein Nahrungsmittel durch einen Benutzer besonders einfach auf der zweiten Wärmeplatte angeordnet werden kann, ohne dass ihn dabei die erste Wärmeplatte in seiner Bewegungsfreiheit einschränkt.

Nach einer Ausführungsform der Erfindung kann die erste Wärmeplatte in der ersten Position einrastbar sein. Hierunter wird im Rahmen dieser Beschreibung insbesondere verstanden, dass die erste Wärmeplatte aufgrund einer Rastverbindung in der ersten Position gehalten wird. Erst wenn eine Rastkraft überwunden wird, lässt sich die erste Wärmeplatte verschwenken. Die Einrastung der ersten Wärmeplatte in der ersten Position ist besonders vorteilhaft bei der Erhitzung von Nahrungsmitteln, die nicht in direkten Kontakt mit der ersten Wärmeplatte kommen sollen, da sie beispielsweise besonders weich sind oder mit Käse überbacken werden sollen. Aufgrund der Einrastung sinkt die erste Wärmeplatte ohne Krafteinwirkung nicht bis zum jeweiligen Nahrungsmittel ab.

Nach einer Ausführungsform der Erfindung kann die Vorrichtung einen Rahmen umfassen, der zwischen der ersten Wärmeplatte in der ersten Position und der zweiten Wärmeplatte anordbar ist. Die Luftdurchlässe können so angeordnet sein, dass die Luft, die aus den Luftdurchlässen austritt, innerhalb des Rahmens aus der ersten Wärmeplatte austritt, wenn der Rahmen zwischen der ersten Wärmeplatte in der ersten Position und der zweiten Wärmeplatte angeordnet ist. Der Rahmen kann beispielsweise eine Höhe zwischen 3 und 15 cm aufweisen. Besonders bevorzugt ist eine Höhe zwischen 5 und 10 cm.

Der Rahmen ist vorteilhaft, da sich so ein durch den Rahmen, die erste Wärmeplatte und die zweite Wärmeplatte begrenzter Backraum ergibt, in dem Nahrungsmittel gebacken werden können, da die erhitzte Luft in diesen Backraum durch die Luftdurchlässe eintritt. Dabei können die erste Wärmeplatte und die zweite Wärmeplatte jeweils in direktem Kontakt mit dem Rahmen stehen. So lässt sich beispielsweise ein Nahrungsmittel von unten mit der zweiten Wärmeplatte relativ stark erhitzen und von oben mit der erhitzten Luft beaufschlagen. Dies kann insbesondere vorteilhaft für das Backen einer Pizza sein, bei der der Boden aufgrund des direkten Kontakts mit der zweiten Wärmeplatte relativ kross gebacken wird, während die mit Käse bedeckte Oberseite lediglich mit der erhitzten Luft beaufschlagt wird, sodass der Käse schmilzt und gebräunt wird.

Beim Verfahren gemäß Anspruch 15 wird Luft durch das Belüftungsmittel durch die Luftkanäle und die Luftdurchlässe in einen Raum zwischen der ersten Wärmeplatte in der ersten Position und der zweiten Wärmeplatte eingebracht.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: eine schematische Draufsicht auf eine erste Wärmeplatte nach einer Ausführungsform der Erfindung;
- Fig. 2: eine schematische Schnittansicht einer Vorrichtung nach einer Ausführungsform der Erfindung;
- Fig. 3: einen vergrößerten Ausschnitt aus Fig. 2;
- Fig. 4: eine schematische perspektivische Ansicht einer Vorrichtung nach einer Ausführungsform der Erfindung; und
- Fig. 5: eine schematische perspektivische Ansicht einer Vorrichtung nach einer Ausführungsform der Erfindung.

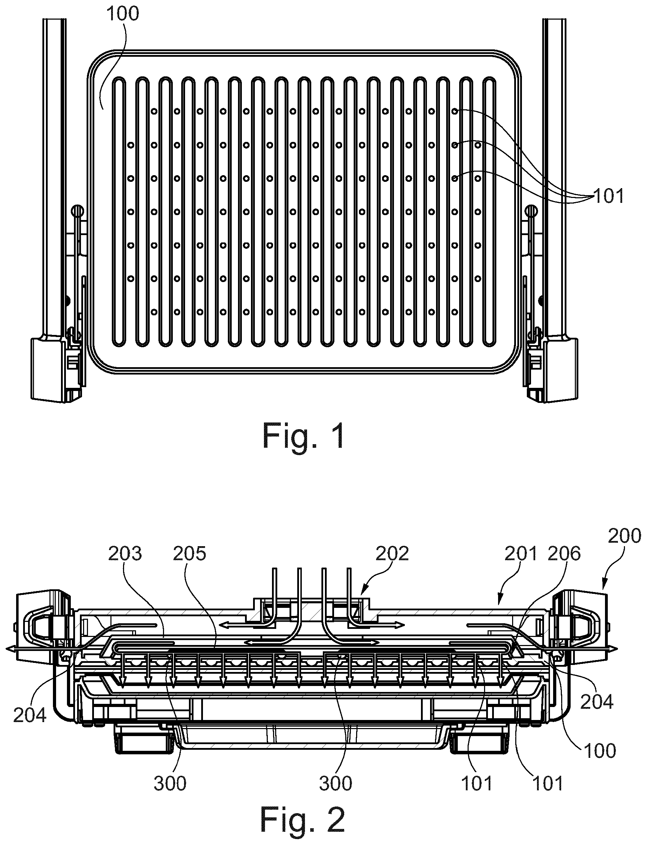

Die in Figur 1 dargestellte erste Wärmeplatte 100 weist eine Vielzahl von Luftdurchlässen 101 auf, von denen in Figur 1 aus Gründen der Übersichtlichkeit lediglich drei mit einem Bezugszeichen versehen sind. Die Luftdurchlässe 101 sind in Reihen mit regelmäßigen Abständen angeordnet, sodass eine besonders gleichmäßige Verteilung der Luft erreicht werden kann. Die Luftdurchlässe 101 in jeweils einer Reihe weisen ebenfalls gleichmäßige Abstände zueinander auf.

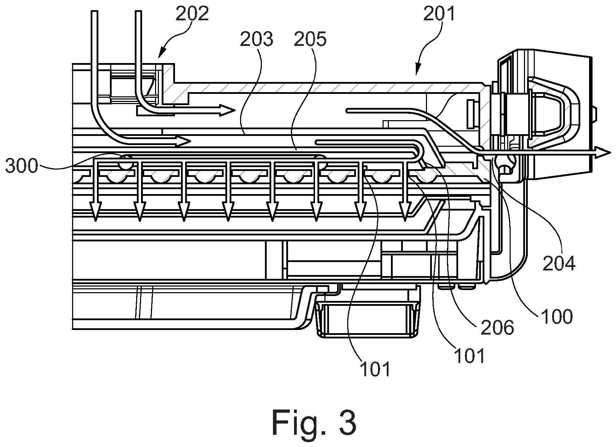

Das Funktionsprinzip lässt sich besonders gut anhand der Figuren 2 und 3 erklären. Die Vorrichtung 200 umfasst einen Deckel 201, an dem die erste Wärmeplatte 100 mit den Luftdurchlässen 101 angeordnet ist. Außerdem ist an einer Oberseite des Deckels ein Belüftungsmittel 202 angeordnet. Innerhalb des Deckels sind ein oberes Blech 203 und ein unteres Blech 205 angeordnet, die Luftkanäle begrenzen. Das obere Blech 203 und das untere Blech 205 sind parallel zur ersten Wärmeplatte 100 angeordnet. Dabei weist das untere Blech 205 zwei Schlitze 206 auf, durch die Luft von einem ersten Luftkanal zwischen dem oberen Blech 203 und dem unteren Blech 205 in einen zweiten Luftkanal zwischen dem unteren Blech 205 und der ersten Wärmeplatte 100 gelangen kann.

Der Deckel 201 weist außerdem zwei seitliche Luftauslässe 204 auf, durch die Luft aus einem dritten Luftkanal zwischen der Oberseite des Deckels 201 und dem oberen Blech 203 in eine äußere Umgebung abgeführt werden kann. Außerdem sind angrenzend an die erste Wärmeplatte 100 elektrische Erhitzungsmittel 300 vorgesehen. Außerdem isolieren die Luftauslässe 204 die Oberseite des Deckels 201 thermisch von der ersten Wärmeplatte 100, sodass die Oberseite beim Betrieb der Vorrichtung 200 weniger stark erwärmt wird.

Im Betrieb saugt das Belüftungsmittel 202 Luft von außerhalb der Vorrichtung 200 an und leitet sie in den ersten und den dritten Luftkanal. Die Luftströmungen sind in den Figuren 2 und 3 durch Pfeile dargestellt. Die in den dritten Luftkanal geleitete Luft entweicht durch die seitlichen Luftauslässe 204 wieder nach außen. Dabei wird sie erwärmt und transportiert somit Wärme aus dem Inneren des Deckels 201 nach außen weg.

Die in den ersten Luftkanal geleitete Luft strömt entlang des unteren Blechs 205 und durch die Schlitze 206 in den zweiten Luftkanal. Vom zweiten Luftkanal strömt sie durch die Luftdurchlässe 101 in Richtung der zweiten Wärmeplatte.

Mit diesem Prinzip wird eine gute thermische Isolierung der Oberseite des Deckels 201 erreicht. Die durch den ersten, den zweiten und den dritten Luftkanal strömende Luft führt jeweils Wärme weg von der Oberseite des Deckels 201. Die durch den ersten und den zweiten Luftkanal geleitete Luft wird besonders stark erwärmt, da sie mehrmals umgeleitet wird. Insbesondere die Umleitung um 180° beim Übergang vom ersten Luftkanal in den zweiten Luftkanal durch die Schlitze 206 trägt zur starken Erwärmung bei. Bei Durchströmung des ersten Luftkanals wird die Luft bereits erwärmt. Diese bereits erwärmte Luft wird dann im zweiten Luftkanal noch weiter erwärmt. Die durch die Luftdurchlässe 101 austretende Luft ist somit stark erwärmt und kann zur Erhitzung eines Nahrungsmittels unterhalb der ersten Wärmeplatte 100 genutzt werden.

Die Nutzung der erhitzten Luft für die Erhitzung des Nahrungsmittels kann vorteilhaft sein, wenn das Nahrungsmittel nicht in Kontakt mit der ersten Wärmeplatte 100 gelangen soll, weil es beispielsweise nicht dazu geeignet ist, einem Druck von oben standzuhalten und verformt würde. Auch für die Erhitzung von Nahrungsmitteln, die mit Käse überbacken werden sollen, ist die Zufuhr der erhitzten Luft durch die Luftdurchlässe vorteilhaft.

Die Anordnung des ersten Blechs 203 und des zweiten Blechs 205 ist außerdem vorteilhaft, wenn das Belüftungsmittel 202 nicht eingeschaltet ist und somit keine Luft in den Innenraum des Deckels 201 geleitet wird. In diesem Fall üben das erste Bleche 203 und das zweite Blech 205 in Kombination mit den durch sie definierten Luftkanälen eine thermisch isolierende Funktion aus und senken das Risiko einer Überhitzung des Belüftungsmittels 202.

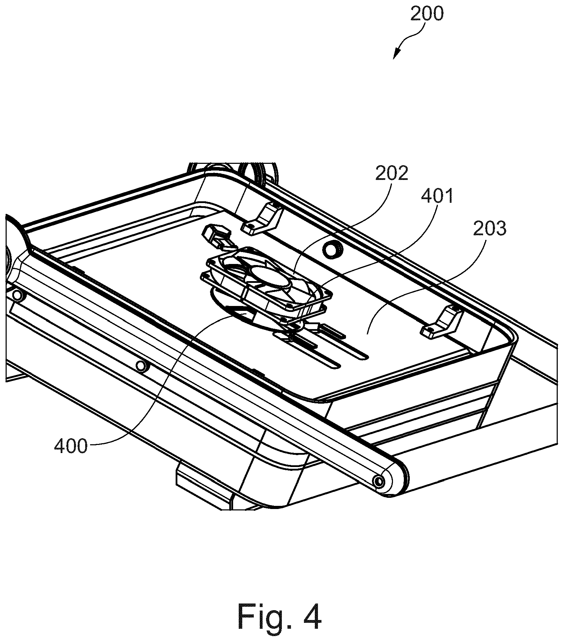

In Figur 4 ist die Oberseite des Deckels 201 nicht dargestellt, damit der dritte Luftkanal ersichtlich wird. Es ist eine Öffnung 400 dargestellt, durch die die Luft in den ersten Luftkanal geleitet wird. Die Öffnung 400 kann durch ein Verschlussmittel 401 teilweise oder ganz verschlossen werden. Ein Benutzer kann somit je nach Stellung des Verschlussmittels 401 auswählen, ob er heiße Luft durch die Luftdurchlässe 101 strömen lassen möchte oder nicht. Denn wenn die Öffnung 400 verschlossen ist, strömt keine Luft in den ersten Luftkanal, sodass auch keine Luft aus den Luftdurchlässen 101 austritt.

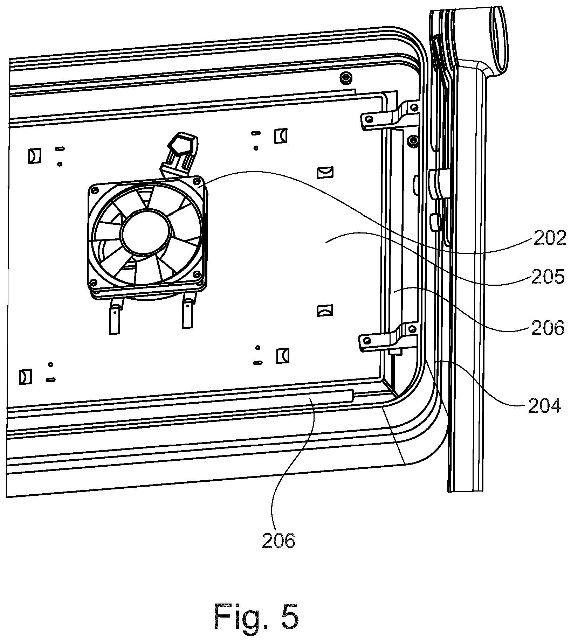

In Figur 5 sind die Oberseite des Deckels 201 und das erste Blech 203 nicht dargestellt, damit der erste Luftkanal ersichtlich wird. In Figur 5 sind besonders gut die Schlitze 206 des zweiten Blechs 205 zu erkennen, durch die die Luft vom ersten Luftkanal in den zweiten Luftkanal strömen kann. Die Schlitze können beispielsweise in allen seitlichen Randbereichen des zweiten Blechs 205 angeordnet sein, sodass eine besonders gleichmäßige und starke Erwärmung der Luft erfolgt.

## Patentansprüche

1. Vorrichtung (200) zur Erhitzung von Nahrungsmitteln, umfassend ein Gehäuse, eine erste Wärmeplatte (100) und eine zweite Wärmeplatte, wobei die erste Wärmeplatte (100) in einer ersten Position parallel zur zweiten Wärmeplatte angeordnet ist, wobei die erste Wärmeplatte (100) von der ersten Position in eine zweiten Position und umgekehrt verschwenkbar ist, wobei die erste Wärmeplatte (100) und die zweite Wärmeplatte jeweils dazu ausgebildet sind, erhitzt zu werden und in direktem Kontakt ein Nahrungsmittel zu erhitzen, wobei die Vorrichtung (200) ein Belüftungsmittel (202) und Luftkanäle umfasst, wobei das Belüftungsmittel (202) am Gehäuse angeordnet ist und dazu ausgebildet ist, Luft von außerhalb der Vorrichtung (200) anzusaugen und in die Luftkanäle einzublasen, und wobei die Luftkanäle dazu ausgebildet sind, die Luft vom Belüftungsmittel (202) zur ersten Wärmeplatte (100) zu leiten
, **dadurch gekennzeichnet, dass** die erste Wärmeplatte (100) Luftdurchlässe (101) umfasst, wobei die Luftdurchlässe (101) dazu ausgebildet sind, Luft von den Luftkanälen zwischen die erste Wärmeplatte (100) in der ersten Position und die zweite Wärmeplatte zu leiten.

2. Vorrichtung (200) nach dem vorherigen Anspruch **dadurch gekennzeichnet, dass** die Vorrichtung (200) Erhitzungsmittel (300) umfasst, wobei die Erhitzungsmittel (300) dazu ausgebildet sind, die erste Wärmeplatte (100) und die von den Luftkanälen geleitete Luft zu erhitzen.

3. Vorrichtung (200) nach einem der vorherigen Ansprüche, **dadurch gekennzeichnet, dass** die Luftkanäle dazu ausgebildet sind, die Luft vom Belüftungsmittel (202) durch das Gehäuse und anschließend aus dem Gehäuse raus zu führen.

4. Vorrichtung (200) nach einem der vorherigen Ansprüche, **dadurch gekennzeichnet, dass** das Gehäuse einen schwenkbaren Deckel (201) umfasst, wobei das Belüftungsmittel (202) an einer Außenseite des Deckels (201) angeordnet ist und wobei die Luftkanäle innerhalb des Deckels (201) angeordnet sind.

5. Vorrichtung (200) nach dem vorherigen Anspruch, **dadurch gekennzeichnet, dass** die erste Wärmeplatte (100) am Deckel (201) angeordnet und gemeinsam mit dem Deckel (201) verschwenkbar ist.

6. Vorrichtung (200) nach einem der vorherigen Ansprüche, **dadurch gekennzeichnet, dass** die Luftkanäle dazu ausgebildet sind, die Luft vom Belüftungsmittel (202) durch den Deckel (201) und in einem seitlichen Randbereich des Deckels (201) aus dem Deckel (201) nach außen zu führen.

7. Vorrichtung (200) nach einem der vorherigen Ansprüche, **dadurch gekennzeichnet, dass** das Belüftungsmittel (202) an einer Oberseite des Deckels (201) angeordnet ist.

8. Vorrichtung (200) nach einem der vorherigen Ansprüche, **dadurch gekennzeichnet, dass** die Luftkanäle dazu ausgebildet sind, die Luft vom Belüftungsmittel (202) mehrmals umzuleiten, bevor die Luft die Luftdurchlässe (101) erreicht.

9. Vorrichtung (200) nach dem vorherigen Anspruch, **dadurch gekennzeichnet, dass** die Luftkanäle dazu ausgebildet sind, die Luft zumindest einmal um mehr als 150°, vorzugsweise um in etwa 180°, umzulenken, bevor die Luft die Luftdurchlässe (101) erreicht.

10. Vorrichtung (200) nach einem der vorherigen Ansprüche, **dadurch gekennzeichnet, dass** die erste Wärmeplatte (100) in der zweiten Position in etwa senkrecht zur zweiten Wärmeplatte angeordnet ist.

11. Vorrichtung (200) nach einem der vorherigen Ansprüche, **dadurch gekennzeichnet, dass** die erste Wärmeplatte (100) in der ersten Position einrastbar ist.

12. Vorrichtung (200) nach einem der vorherigen Ansprüche, **dadurch gekennzeichnet, dass** die Vorrichtung (200) einen Rahmen umfasst, der zwischen der ersten Wärmeplatte (100) in der ersten Position und der zweiten Wärmeplatte anordbar ist, wobei die Luftdurchlässe (101) so angeordnet sind, dass die Luft, die aus den Luftdurchlässen (101) austritt, innerhalb des Rahmen aus der ersten Wärmeplatte (100) austritt, wenn der Rahmen zwischen der ersten Wärmeplatte (100) in der ersten Position und der zweiten Wärmeplatte angeordnet ist.

13. Vorrichtung (200) nach dem vorherigen Anspruch, **dadurch gekennzeichnet, dass** die erste Wärmeplatte (100) in der ersten Position und die zweite Wärmeplatte in direktem Kontakt mit dem Rahmen bringbar sind.

14. Verfahren zur Erhitzung eines Nahrungsmittels mit einer Vorrichtung (200) nach einem der vorherigen Ansprüche, **dadurch gekennzeichnet, dass** das Belüftungsmittel (202) Luft durch die Luftkanäle und die Luftdurchlässe (101) in einen Raum zwischen der ersten Wärmeplatte (100) in der ersten Position und der zweiten Wärmeplatte einbringt.

## Claims

1. Device (200) for heating food products,
including a housing, a first heating plate (100) and a second heating plate, wherein the first heating plate (100) is arranged in a first position parallel to the second heating plate, wherein the first heating plate (100) is able to be pivoted from the first position into a second position and vice versa, wherein the first heating plate (100) and the second heating plate are in each case configured to be heated and to heat a food product in direct contact, wherein the device (200) includes a ventilation means (202) and air ducts, wherein the ventilation means (202) is arranged on the housing and is configured to suction air from outside the device (200) and to blow it into the air ducts, and wherein the air ducts are configured to guide the air from the ventilation means (202) to the first heating plate (100),
**characterised in that** the first heating plate (100) includes air passages (101), wherein the air passages (101) are configured to guide air from the air ducts between the first plate (100) in the first position and the second heating plate.

2. Device (200) according to the preceding claim, **characterised in that** the device (200) includes heating means (300), wherein the heating means (300) are configured to heat the first heating plate (100) and the air guided by the air ducts.

3. Device (200) according to any of the preceding claims, **characterised in that** the air ducts are configured to guide the air from the ventilation means (202) through the housing and subsequently out of the housing.

4. Device (200) according to any of the preceding claims, **characterised in that** the housing includes a pivotable lid (201), wherein the ventilation means (202) are arranged on an outer side of the lid (201) and wherein the air ducts are arranged within the lid (201).

5. Device (200) according to the preceding claim, **characterised in that** the first heating plate (100) is arranged on the lid (201) and is able to be pivoted together with the lid (201).

6. Device (200) according to any of the preceding claims, **characterised in that** the air ducts are configured to guide the air from the ventilation means (202) through the lid (201) and, in a lateral edge region of the lid (201), out of the lid (201) to the outside.

7. Device (200) according to any of the preceding claims, **characterised in that** the ventilation means (202) are arranged on an upper side of the lid (201).

8. Device (200) according to any of the preceding claims, **characterised in that** the air ducts are configured to redirect the air from the ventilation means (202) several times before the air reaches the air passages (101).

9. Device (200) according to the preceding claim, **characterised in that** the air ducts are configured to redirect the air at least once around more than 150°, preferably around approximately 180°, before the air reaches the air passages (101).

10. Device (200) according to any of the preceding claims, **characterised in that** the first heating plate (100) in the second position is arranged approximately perpendicularly to the second heating plate.

11. Device (200) according to any of the preceding claims, **characterised in that** the first heating plate (100) can be snapped into the first position.

12. Device (200) according to any of the preceding claims, **characterised in that** the device (200) includes a frame which can be arranged between the first heating plate (100) in the first position and the second heating plate, wherein the air passages (101) are arranged such that the air which emerges out of the air passages (101) emerges within the frame out of the first heating plate (100) when the frame is arranged between the first heating plate (100) in the first position and the second heating plate.

13. Device (200) according to the preceding claim, **characterised in that** the first heating plate (100) and the second heating plate can be brought in direct contact with the frame.

14. Method for heating a food product using a device (200) according to any of the preceding claims, **characterised in that** the ventilation means (202) introduce air through the air ducts and the air passages (101) into a space between the first heating plate (100) in the first position and the second heating plate.

## Revendications

1. Dispositif (200) pour chauffer des produits alimentaires comprenant un boîtier, une première plaque chauffante (100) et une seconde plaque chauffante, dans lequel la première plaque chauffante (100) est disposée dans une première position parallèle à la seconde plaque chauffante, dans lequel la première plaque chauffante (100) peut pivoter de la première position à une seconde position et vice versa, dans lequel la première plaque chauffante (100) et la seconde plaque chauffante sont chacune adaptées pour être chauffées et pour chauffer en contact direct un produit alimentaire, dans lequel le dispositif (200) comprend un moyen de ventilation (202) et des conduits d'air, dans lequel le moyen de ventilation (202) est disposé sur le boîtier et est conçu pour aspirer de l'air de l'extérieur du dispositif (200) et pour le souffler dans les conduits d'air, et dans lequel les conduits d'air sont conçus pour guider l'air du moyen de ventilation (202) jusqu'à la première plaque chauffante (100),
**caractérisé en ce que** la première plaque chauffante (100) comprend des passages d'air (101), dans lequel les passages d'air (101) sont conçus pour guider de l'air des canaux d'air entre la première plaque chauffante (100) dans la première position et la seconde plaque chauffante.

2. Dispositif (200) selon la revendication précédente, **caractérisé en ce que** le dispositif (200) comprend des moyens de chauffage (300), dans lequel les moyens de chauffage (300) sont conçus pour chauffer la première plaque chauffante (100) et l'air guidé par les conduits d'air.

3. Dispositif (200) selon l'une quelconque des revendications précédentes, **caractérisé en ce que** les conduits d'air sont conçus pour guider l'air du moyen de ventilation (202) à travers le boîtier puis hors du boîtier.

4. Dispositif (200) selon l'une quelconque des revendications précédentes, **caractérisé en ce que** le boîtier comprend un couvercle pivotant (201), dans lequel le moyen de ventilation (202) est disposé sur un côté extérieur du couvercle (201) et dans lequel les conduits d'air sont disposés à l'intérieur du couvercle (201).

5. Dispositif (200) selon la revendication précédente, **caractérisé en ce que** la première plaque chauffante (100) est disposée sur le couvercle (201) et peut pivoter avec le couvercle (201).

6. Dispositif (200) selon l'une quelconque des revendications précédentes, **caractérisé en ce que** les conduits d'air sont conçus pour guider l'air du moyen de ventilation (202) à travers le couvercle (201) et hors du couvercle (201) dans une zone de bord latérale du couvercle (201).

7. Dispositif (200) selon l'une quelconque des revendications précédentes, **caractérisé en ce que** le moyen de ventilation (202) est disposé sur un côté supérieur du couvercle (201).

8. Dispositif (200) selon l'une quelconque des revendications précédentes, **caractérisé en ce que** les conduits d'air sont conçus pour dévier l'air du moyen de ventilation (202) plusieurs fois avant que l'air n'atteigne les passages d'air (101).

9. Dispositif (200) selon la revendication précédente, **caractérisé en ce que** les conduits d'air sont conçus pour dévier l'air au moins une fois de plus de 150°, de préférence d'environ 180°, avant que l'air n'atteigne les passages d'air (101).

10. Dispositif (200) selon l'une quelconque des revendications précédentes, **caractérisé en ce que** la première plaque chauffante (100) est disposée dans la seconde position environ perpendiculairement à la seconde plaque chauffante.

11. Dispositif (200) selon l'une quelconque des revendications précédentes, **caractérisé en ce que** la première plaque chauffante (100) peut s'enclencher dans la première position.

12. Dispositif (200) selon l'une quelconque des revendications précédentes, **caractérisé en ce que** le dispositif (200) comprend un cadre pouvant être disposé entre la première plaque chauffante (100) dans la première position et la seconde plaque chauffante, dans lequel les passages d'air (101) sont disposés de sorte que l'air qui sort des passages d'air (101) sort de la première plaque chauffante (100) à l'intérieur du cadre lorsque le cadre est disposé entre la première plaque chauffante (100) dans la première position et la seconde plaque chauffante.

13. Dispositif (200) selon la revendication précédente, **caractérisé en ce que** la première plaque chauffante (100) dans la première position et la seconde plaque chauffante peuvent être amenées en contact direct avec le cadre.

14. Procédé de chauffage d'un produit alimentaire avec un dispositif (200) selon l'une quelconque des revendications précédentes, **caractérisé en ce que** le moyen de ventilation (202) introduit de l'air à travers les conduits d'air et les passages d'air (101) dans un espace entre la première plaque chauffante (100) dans la première position et la seconde plaque chauffante.
